# EUROPEAN PATENT SPECIFICATION

(11) **EP 1 167 211 B1**
(45) Date of publication and mention of the grant of the patent: **11.08.2004**
(21) Application number: 00110885.1
(22) Date of filing: 23.05.2000
(51) Int. Cl.: B65B 61/18, B29C 65/08, B65B 51/22

(54) **An assembly with a pouch and a fitment and a process for its manufacture**
Beutel mit Ausgiesselement und Verfahren zu seiner Herstellung
Poche avec élément verseur et son procédé de fabrication

(43) Date of publication of application: 02.01.2002
(73) Proprietor: Société des Produits Nestlé S.A., 1800 Vevey (CH)
(72) Inventor: Kaeser, Thomas, 3510 Konolfingen (CH)
(74) Representative: Thomas, Alain

(56) References cited:
- EP-A- 0 583 765
- WO-A-96/19387
- GB-A- 853 082
- US-A- 2 850 422
- US-A- 3 231 444
- US-A- 4 063 990
- US-A- 4 512 136
- US-A- 4 632 673
- US-A- 4 718 215
- US-A- 5 473 857
- PATENT ABSTRACTS OF JAPAN vol. 012, no. 490 (M-779), 21 December 1988 (1988-12-21) -& JP 63 212531 A (SENPAKU KOEKI KK), 5 September 1988 (1988-09-05)
- PATENT ABSTRACTS OF JAPAN vol. 012, no. 134 (M-689), 23 April 1988 (1988-04-23) -& JP 62 257830 A (NATL TIRE KK), 10 November 1987 (1987-11-10)

## Description

The present invention concerns an assembly comprising a pouch, a product filled in said pouch and a fitment which is applied onto the pouch through the method of ultrasonic sealing.

It is already known in the art to seal fitments on pouches. The way to proceed is either by heating or by ultrasonic sealing. The ultrasonic sealing technique involves the use of high frequency mechanical vibrations transmitted through thermoplastic parts to generate a frictional heat build-up at an interface. It is known to make ultrasonically seal fitments, but the sealing is carried out on an empty pouch : the pouch is formed, the fitment is sealed on said pouch, the product is filled, for example by aseptic filling and the pouch is finally sealed to obtain the assembly to be stored. The problem of such a solution is that the manufacture of said assembly takes too much time and the line of production is too complicated, because it comprises one more step in the process. Furthermore, there is a risk that the sealing of the fitment is not safe enough. The WO Patent No.96/19387 concerns such a solution. The JP Patent No. 63212531 concerns a welding process wherein one part of a film is not welded by inserting synthetic resin or paint having melting point higher that of the film. This patent does not concern the welding of a fitment on a pouch.

The aim of the present invention is to have an assembly comprising a pouch and a fitment,wherein the production time is shorter than in the previous technique, the line of production is simpler and the fitment is sealed for a safer storage,that is the risk of unsticking is minimised.

The present invention concerns an assembly comprising
- a pouch,
- a product filled in said pouch and
- a fitment which is applied onto the pouch through the method of ultrasonic sealing,
wherein said pouch is produced without any fitment or opening device and completely sealed after the filling, wherein the fitment is applied through the method of ultrasonic sealing after the filling and sealing of the pouch, wherein said pouch is made with a film material specially treated on the inside surface through the addition of a special lacquer or film layer to avoid a sealing at this position or wherein said fitment consists of any thermoplastic polymer or a special blended polymer, like metallocene.

The product is filled in the pouch, which is sealed, and then the fitment is ultrasonically sealed on said pouch. It is important according to the invention that the film material of the pouch is treated on the inside surface to avoid the sealing of both layers of the pouch : this will be more clearly explained in relation with the drawings. The inside surface has a special lacquer or a film layer.

The material of the pouch has low, medium or high barrier properties. Preferably, the material of the pouch has high barrier properties. The material is taken from the group consisting of amorphous polymers like ABS, ABS/polycarbonate alloy, acrylic, acrylic multipolymer, butadiene/styrene, phenylene-oxide based resins, polyamideimide, polyetherimide, polyethersulfone, polystyrene (general purpose), polystyrene (rubber modified), polysulfone, PVC and semi-cristalline polymers, like acetal, cellulosics, fluoropolymers, polyester thermoplastic, ionomer, liquid crystal polymers, nylon, polyethylene terephtalate, polybutylene terephtalate, polyethylene and polypropylene.

The pouch is a plastic film, a laminate or co-extruded film in the form of a semi-rigid pouch or soft pouch.

The thermoplastic polymer used for the fitment must be compatible with the material of the pouch. The fitment can be of the same material as above mentioned for the pouch. Said fitment is made of a body and a base, said base comprising concentric grooves for improving the ultrasonic welding.

Concerning the type of products filled in the pouch they are taken from the group consisting of liquid and viscous food or petfood, clinical nutrition products, milk-based products, any kind of juice, fruit products, mineral water, stilldrinks, soups, sauces, other sauces including dressings and mayonnaise.

According to one embodiment of the invention, the fitment comprises a plug or snap-on type closure and the product is withdrawn through the fitment with a special means, for example a spiking device known in the art. According to a second embodiment of the invention, the fitment comprises a screwing-off type closure and inside said fitment a tamper-evident part, which is pre-punctured and sealed together with the pouch material.

The product in the pouch is filled under
fresh,aseptic,UHT, pasteurised or sterilised conditions.

The present invention concerns further a process for the manufacture of the assembly described above, wherein
- the pouch is filled with the product and sealed,
- then the pouch is transported on conveying means to an ultra-sonic sealing device, wherein said device is charged with a fitment and moved downwards onto the pouch pressing the fitment against an anvil,
- an amount of energy is set free and transported by the sealing device into the fitment base, wherein the sealing of the fitment on the pouch takes place,
- the sealing device is moved upwards and
- frees the pouch.

The amount of energy of the sealing process depends on the type of fitment and of the material of the pouch. The pouch is preferably in a multilayer
Polyethylene/Polyamide/EVOH/Polyethylene and the fitment in a high density Polyethylene.

The sealing device is designed in a special way creating energy directors to specially guide ad focus the energy to certain spots during said sealing process.

The sealing is carried out on a Branson device, where the energy which is released for the sealing process can be controlled.

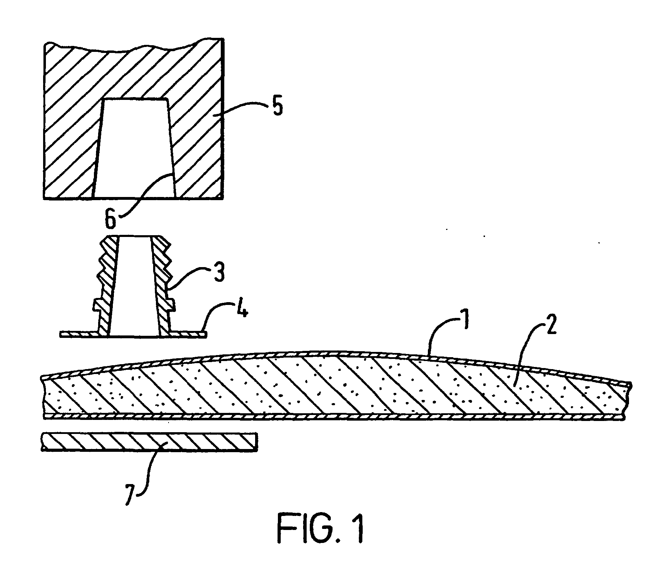

The invention is now illustrated, by way of example, in the attached drawings, in which
Fig. 1 is a schematic view before the sealing of the fitment,
Fig. 2 is a schematic view during the sealing and
Fig. 3 is a schematic view after the sealing.

The pouch (1) is filled with a clinical nutrition product (2) : the pouch is sealed and ready to put on it the fitment (3). The fitment has a base (4). The ultrasonic sealing head (5) with its aperture (6) is just above the fitment and the pouch is placed just above an anvil (7).

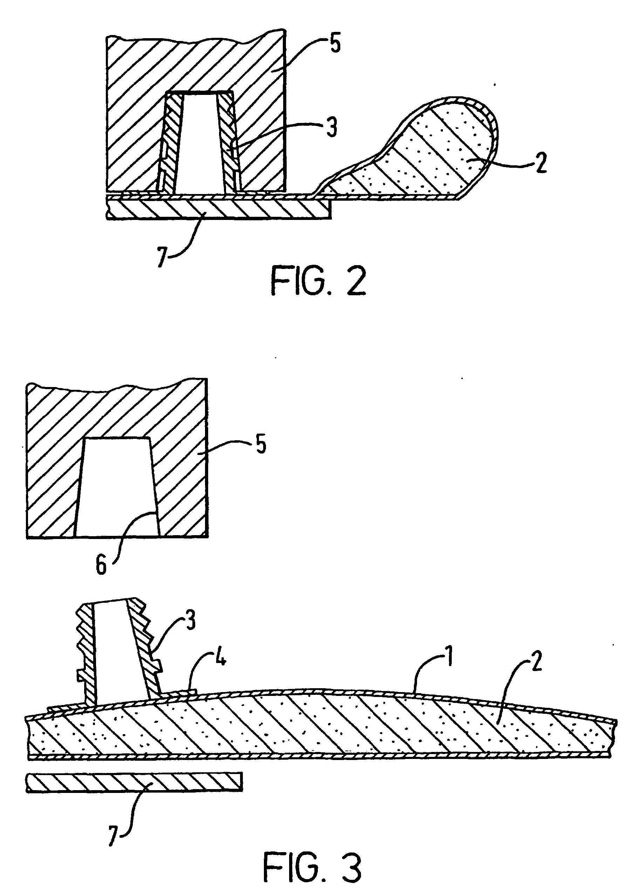

The ultrasonic head (5) moves then downwards (Fig. 2), so that the fitment (3) enters the aperture (6) of the ultrasonic head and said head presses the pouch (1) against the anvil (7). The high frequency is then set up and the heating developed allows the base (4) of the fitment to be sealed on the filled pouch. Because of the special lacquer or film layer on the inside surface of the pouch, only the fitment is sealed and not both layers of the pouch.

The ultrasonic head is finally moved upwards (Fig. 3), the fitment (3) remains sealed on the outside of the pouch through its base (4) and said pouch is then ready to be stored.

## Claims

1. An assembly comprising
- a pouch,
- a product filled in said pouch and
- a fitment which is applied onto the pouch through the method of ultrasonic sealing,
wherein said pouch is produced without any fitment or opening device and completely sealed after the filling, **characterised. in that** the fitment is applied through the method of ultrasonic sealing after the filling and sealing of the pouch, and **in that** said pouch is made with a film material specially treated on the inside surface through the addition of a special lacquer or film layer to avoid a sealing at this position or wherein said fitment consists of any thermoplastic polymer or a special blended polymer, like metallocene.

2. An assembly according to claim 1, wherein the fitment comprises a plug or snap-on type closure and the product is withdrawn through the fitment with a special set.

3. An assembly according to claim 1, wherein the fitment comprises a screwing-off type closure and inside said fitment a tamper-evident part, which is pre-punctured and sealed together with the pouch material.

4. An assembly according to any of claims 1 to 3, wherein the material of the pouch has low, medium or high barrier properties.

5. An assembly according to claim 4, wherein the material of the pouch is a plastic film, a laminate film in the form of a semi-rigid pouch or soft pouch.

6. An assembly according to any of claims 1 to 5, wherein the product is taken from the group consisting of liquid and viscous food or petfood, clinical nutrition products, milk-based products, any kind of juice, fruit products, mineral water, stilldrinks, soups, sauces, other sauces including dressings and mayonnaise.

7. An assembly according to any of claims 1 to 6, wherein the product is filled under fresh, aseptic, UHT, pasteurised or sterilised conditions.

8. An assembly according to any of claims 1 to 7, wherein the fitment is made of a body and a base, said base comprising concentric grooves.

9. A process for the manufacture of the assembly according to any of claims 1 to 8, wherein
- the pouch is filled with the product and sealed,
- then the pouch is transported on conveying means to an ultra-sonic sealing device, wherein said device is charged with a fitment and moved downwards onto the pouch pressing the fitment against an anvil,
- an amount of energy is set and transported by the sealing device into the fitment base, wherein the sealing of the fitment on the pouch takes place,
- the sealing device is moved upwards and
- frees the pouch.

10. A process according to claim 9, wherein the amount of energy of the sealing process is depending on the type of fitment and of the material of the pouch.

11. A process according to any of claims 9 or 10, wherein the sealing device is designed in a special way creating energy directors to specially guide and focus the energy to certain spots during said sealing process.

12. A process according to claim 11, wherein the sealing is carried out on a Branson device, where the energy which is set free for the sealing process can be controlled.

## Patentansprüche

1. Anordnung mit
- einem Beutel,
- einem Produkt, das in den Beutel gefüllt ist, und
- einem Zubehörteil, das an den Beutel durch das Verfahren des Ultraschallschweißens angebracht ist,
wobei der Beutel ohne irgendein Zubehörteil oder eine Öffnungsvorrichtung hergestellt und vollständig nach dem Befüllen verschweißt wird, **dadurch gekennzeichnet, daß** das Zubehörteil durch das Verfahren des Ultraschallschweißens nach dem Befüllen und des Verschweißens des Beutels angebracht ist, und dadurch, daß der Beutel mit einem Füllmaterial gemacht ist, der speziell an der Innenfläche durch die Zugabe eines speziellen Lacks oder einer Filmschicht gemacht ist, um ein Verschweißen an dieser Position zu vermeiden, oder bei dem das Zubehörteil aus irgendeinem Thermoplastpolymer oder einem speziell gemischten Polymer besteht, wie Metallocen.

2. Anordnung nach Anspruch 1, bei der das Zubehörteil einen Steck- oder Schnappverschluß umfaßt, und das Produkt über das Zubehörteil mit einem speziellen Sitz herausgezogen ist.

3. Anordnung nach Anspruch 1, bei dem das Zubehörteil einen Abschraubverschluß umfaßt, und innerhalb des Zubehörteils ein offensichtlich stopfendes Teil umfaßt, das vordurchgestoßen und zusammen mit dem Beutelmaterial geschweißt ist.

4. Anordnung nach einem der Ansprüche 1 bis 3, bei der das Material des Beutels geringe, mittlere oder hohe Zurückhalteeigenschaften hat.

5. Anordnung nach Anspruch 4, bei der das Material des Beutels einen Kunststofffilm, einen Laminatfilm in der Form eines halbfesten Beutels oder weichen Beutels ist.

6. Anordnung nach einem der Ansprüche 1 bis 5, bei der das Produkt aus der Gruppe genommen ist, die aus flüssigen oder viskosen Lebensmittel oder Tierfutter, klinischen Ernährungsprodukten, Produkten auf Milchbasis, irgendeiner Art von Saft, Fruchtprodukten, Mineralwasser, stillen Getränken, Suppen, Saucen, oder anderen Saucen einschließlich Dressing und Mayonnaise besteht.

7. Anordnung nach einem der Ansprüche 1 bis 6, bei der das Produkt unter frischen, aseptischen, UHT, pasteurisierten oder sterilisierten Bedingungen befüllt wird.

8. Anordnung nach einem der Ansprüche 1 bis 7, bei der das Zubehörteil aus einem Körper und einer Basis gemacht ist, wobei die Basis konzentrische Rillen umfaßt.

9. Verfahren für die Herstellung der Anordnung gemäß einem der Ansprüche 1 bis 8, bei dem
- der Beutel mit dem Produkt befüllt und verschweißt wird,
- dann der Beutel auf Fördermitteln zu einer Ultraschallschweißvorrichtung transportiert wird, wobei die Vorrichtung mit einem Zubehörteil beladen und auf den Beutel nach unten auf den Beutel bewegt wird, wobei das Zubehörteil gegen einen Amboß gepreßt wird,
- eine Energiemenge eingestellt und durch die Schweißvorrichtung in die Zubehörteilbasis übertragen wird, wobei das Schweißen des Zubehörteils an den Beutel stattfindet,
- die Schweißvorrichtung nach oben bewegt wird und
- den Beutel freigibt.

10. Verfahren nach Anspruch 9, bei dem die Menge an Energie des Schweißverfahrens von der Art des Zubehörteils und des Materials des Beutels abhängt.

11. Verfahren nach einem der Ansprüche 9 oder 10, wobei die Schweißvorrichtung auf eine spezielle Weise ausgelegt ist, um Energiedirektoren zu erzeugen, um die Energie während des Schweißverfahrens zu bestimmten Punkten speziell zu leiten und zu fokussieren.

12. Verfahren nach Anspruch 11, bei dem das Schweißen auf einer Branson-Vorrichtung ausgeführt wird, wobei die Energie, die für das Schweißverfahren freigesetzt wird, geregelt werden kann.

## Revendications

1. Assemblage comprenant :
- une poche,
- un produit remplissant ladite poche, et
- une monture qui est appliquée sur la poche par le procédé de soudage ultrasonique,
dans lequel ladite poche est produite sans aucune monture ou sans aucun dispositif d'ouverture et est soudée totalement après remplissage, **caractérisé en ce que** la monture est appliquée par le procédé de soudage ultrasonique après remplissage et soudage de la poche, et **en ce que** ladite poche est constituée d'une matière en film traitée spécialement sur la surface intérieure par addition d'une couche de vernis ou de film particulière, pour d'éviter un soudage à cette position, ou bien ladite monture consiste en n'importe quel polymère thermoplastique ou polymère mixte spécial, tel qu'un métallocène.

2. Assemblage suivant la revendication 1, dans lequel la monture comprend une fermeture du type bouchon ou couvercle à encliqueter et le produit est déchargé à travers la monture avec un moyen particulier.

3. Assemblage suivant la revendication 1, dans lequel la monture comprend une fermeture du type à vis et, à l'intérieur de ladite monture, une pièce mettant en évidence la fraude, qui est préperforée et soudée conjointement avec la matière de la poche.

4. Assemblage suivant l'une quelconque des revendications 1 à 3, dans lequel la matière de la poche a des propriétés faibles, moyennes ou fortes de barrière.

5. Assemblage suivant la revendication 4, dans lequel la matière de la poche est un film de matière plastique, un film stratifié sous forme d'une poche semi-rigide ou d'une poche souple.

6. Assemblage suivant l'une quelconque des revendications 1 à 5, dans lequel le produit est choisi dans le groupe consistant en des aliments liquides et visqueux pour l'homme ou les animaux de compagnie, des produits nutritifs cliniques, des produits à base de lait, n'importe quel type de jus, des produits à base de fruits, l'eau minérale, des boissons non gazeuses, des soupes, des sauces, d'autres sauces, y compris des assaisonnements et la mayonnaise.

7. Assemblage suivant l'une quelconque des revendications 1 à 6, dans lequel le produit est utilisé pour le remplissage à l'état frais dans des conditions aseptiques, dans des conditions UHT, à l'état pasteurisé ou à l'état stérilisé.

8. Assemblage suivant l'une quelconque des revendications 1 à 7, dans lequel la monture est constituée d'un corps et d'une base, ladite base comprenant des rainures concentriques.

9. Procédé pour la production de l'assemblage suivant l'une quelconque des revendications 1 à 8, dans lequel
- la poche est remplie avec le produit et est soudée,
- puis la poche est transportée sur un moyen de transport jusqu'à un dispositif de soudage ultrasonique, dans lequel ledit dispositif est muni d'une monture et est déplacé vers le bas sur la poche en pressant la monture contre une enclume,
- une quantité d'énergie est libérée et transportée par le dispositif de soudage dans la base de la monture, où le soudage de la monture sur la poche s'effectue,
- le dispositif de soudage est remonté, et
- la poche est libérée.

10. Procédé suivant la revendication 9, dans lequel la quantité d'énergie du procédé de soudage dépend du type de monture et de la matière de la poche.

11. Procédé suivant l'une quelconque des revendications 9 et 10, dans lequel le dispositif de soudage est conçu d'une manière particulière créant des éléments dirigeant l'énergie pour guider et focaliser spécialement l'énergie à certains points au cours dudit procédé de soudage.

12. Procédé suivant la revendication 11, dans lequel le soudage est effectué sur un dispositif Branson, où l'énergie qui est libérée pour un procédé de soudage peut être régulée.
